# EUROPÄISCHE PATENTSCHRIFT

(11) **EP 3 737 707 B1**
(45) Veröffentlichungstag und Bekanntmachung des Hinweises auf die Patenterteilung: **10.12.2025**
(21) Anmeldenummer: 19701964.9
(22) Anmeldetag: 11.01.2019
(51) Int. Cl.: C08G 18/54, C08G 18/76, C08G 8/10, C08G 18/18

(54) **FORMALDEHYDREDUZIERTES PHENOLHARZBINDEMITTEL**
PHENOLIC RESIN BINDER WITH REDUCED FORMADEHYDE CONTENT
LIANT RÉSINE PHÉNOLIQUE À TENEUR RÉDUITE EN FORMALDÉHYDE

(30) Priorität: 12.01.2018 DE 102018100694
(43) Veröffentlichungstag der Anmeldung: 18.11.2020
(73) Patentinhaber: ASK Chemicals GmbH, 40721 Hilden (DE)
(72) Erfinder: PRIEBE, Christian, 42489 Wülfrath (DE)
(74) Vertreter: Müller Schupfner & Partner Patent- und Rechtsanwaltspartnerschaft mbB (Hamburg)
(86) Internationale Anmeldenummer: PCT/DE2019/100024
(87) Internationale Veröffentlichungsnummer: WO 2019/137583

(56) Entgegenhaltungen:
- WO-A1-2016/165916

## Beschreibung

Die vorliegende Erfindung betrifft formaldehydreduzierte Phenolharze vom Benzylethertyp, enthaltend zumindest einen Formaldehydfänger in Form einer beta-Dicarbonyl-Verbindung und weiterhin eine alpha-Carbonyl-Carboxyl-Verbindung, insbesondere Glyoxylsäure, Bindemittel auf Basis dieser Phenolharze und Isocyanat-Verbindungen mit zumindest zwei Isocyanat-Gruppen zum Einsatz in Phenolharz-Polyurethan-Cold Box-Verfahren (PUCB-Verfahren) und/oder Phenolharz-Polyurethan-No-Bake-Verfahren (PUNB-Verfahren). Weiterhin betrifft die Erfindung Formstoffmischungen enthaltend das Bindemittel und ein Verfahren zur Herstellung von Kernen, Formen oder Speisern. Insbesondere, aber nicht notwendigerweise, enthält bereits die Polyol-Komponente zur Herstellung der Formstoffmischung die beta-Dicarbonyl-Verbindung und Verbindungen mit alpha-Carbonyl-Carboxyl-Struktur.

### Hintergrund der Erfindung und allgemeiner Stand der Technik

Die Herstellung von Kernen und Formen nach dem PUCB- und/oder nach dem PUNB-Verfahren hat in der Gießereiindustrie große Bedeutung erlangt. Zur Bindung eines feuerfesten Formgrundstoffes werden dabei Zwei-Komponenten-Polyurethan-Systeme eingesetzt. Die Polyol-Komponente besteht aus einem Polyol mit mindestens zwei OH-Gruppen pro Molekül, die Isocyanat-Komponente aus einem Isocyanat mit mindestens zwei NCO-Gruppen pro Molekül. Als Polyol-Komponente werden u.a. Phenol-Formaldehyd-Harze eingesetzt. Die Aushärtung des Gemischs aus Formgrundstoff und Bindemittel, kurz auch Formstoffmischung genannt, erfolgt beim PUCB-Verfahren mit Hilfe von niedrigsiedenden tertiären Aminen, die nach der Formgebung gasförmig oder als Aerosol durch die Formstoffmischung geleitet werden (vergleiche US 3409579). Üblicherweise erfolgt dies mit Hilfe eines Trägergases, z.B. Luft, Stickstoff oder CO₂, in das zumindest ein tertiäres Amin eindosiert wird. Beim PUNB-Verfahren erfolgt eine Zugabe von flüssigen tertiären Aminen und/oder Metallverbindungen als Katalysator zur Formstoffmischung.

Es hat nicht an Versuchen gefehlt den Formaldehydgehalt derartiger Phenol-Formaldehyd-Harze, wie Resole oder Phenolharze, insbesondere Phenol-Formaldehydharze, vom Benzylethertyp, abzusenken bis auf Gehalte von freiem Formaldehyd von kleiner 0,1 Gew.%, insbesondere von kleiner 0,01 Gew.%,

US 5358748 schlägt für wässrige saure Resole den Einsatz von Formaldehydfängern vor. Als Formaldehydfängern werden heterocylische Stickstoffverbindungen eingesetzt, die mit Säuren (bevorzugt Sulfamin-Säure) versetzt werden.

Auch aus der US 5795933 ist bekannt für Phenol-Formaldehydharze Formaldehydfänger zur Reduktion des Gehalts an freiem Formaldehyd einzusetzen. Als Formaldehydfänger werden beta-Dicarbonyl-Verbindungen eingesetzt, wie 1,3-Cyclohexanedion, Dimethylmalonat, Diethylmalonat, Methylacetoacetat, Ethylacetoacetat, Isopropylacetoacetat, t-Butylacetoacetat oder Methyl-t-butylmalonat. Flüchtige Lösemittel können als Zusatz enthalten sein.

Die US 2011/0015341 A1 offenbart die Herstellung von Phenol-Formaldehydharzen in Gegenwart von Formaldehydfängern. Als Formaldehydfänger werden beta-Dicarbonyl-Verbindungen eingesetzt. Die Phenol-Formaldehydharze werden durch alkalisch katalysierte Kondensation hergestellt.

Die WO 2016/165916 A1 beschreibt eine Phenolharz-Zusammensetzung zur Verwendung im Polyurethan-Cold-Box-und/oder No-Bake-Verfahren. Die Phenolharz-Zusammensetzung umfasst ein orthokondensiertes phenolisches Resol mit veretherten und/oder freien Methylolgruppen in einer Gesamtmenge von 40 bis 60 Gew.-% und freies Formaldehyd in einer Menge von weniger als 0,1 Gew.-%, jeweils bezogen auf die Gesamtmasse der Phenolharz-Komposition, und ein oder mehrere Reaktionsprodukte von Formaldehyd mit einer oder mehreren C-H-aciden Verbindungen. Als CH-acide Verbindungen werden beta-Dicarbonylverbindungen zur Reduzierung von freiem Formaldehyd offenbart. Bevorzugt werden Malonsäuredimethylester und Malonsäurediethylester eingesetzt. Zu den Reaktionsprodukten bei Verwendung eines Malonsäureesters als CH-acide Eduktverbindung gehören insbesondere 2-Methylenmalonester, 2,2-Bis(hydroxymethyl)malonester, 2-(Hydroxymethyl)malonester und 2-(3-Hydroxy-2-oxa-propyl)malonester. Der Anteil freien Formaldehyds wird mit weniger als 0,1 Gew.%, bevorzugt weniger als 0,08 Gew.% und insbesondere bevorzugt weniger als 0,05% Gew. % angegeben, jeweils bezogen auf die Phenolharz-Zusammensetzung. Eine Untergrenze an freiem Formaldehyd wird nicht genannt. Bevorzugt ist das orthokondensierte phenolische Resol ein Benzyletherharz der folgenden Formel (wobei m/n größer gleich 1 ist):

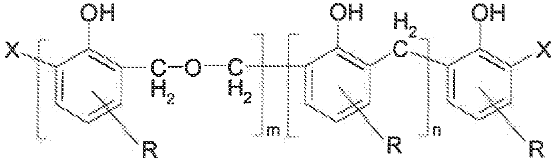

Zu den Festigkeiten der so erhältlichen ausgehärteten Formstoffe wird im Detail nichts gesagt. Eine alpha Carbonyl-Carboxyl-Verbindung wird nicht eingesetzt. Es reduziert sich zwar der Gehalt an freiem Formaldehyd durch die Zugabe von beta-Dicarbonylverbindungen wie Ethylacetoacetat, leider verringert sich aber auch die Festigkeit, wie vorliegend nachgewiesen. Dem will die vorliegende Erfindung entgegensteuern.

### Aufgabe der Erfindung

Aufgabe der Erfindung ist es, Bindemittel basierend auf Phenolharzen vom Benzylethertyp zur Verwendung im Phenolharz-Polyurethan-Cold Box-Verfahren (PUCB-Verfahren) und/oder im Phenolharz-Polyurethan-No-Bake-Verfahren (PUNB-Verfahren) zur Verfügung zu stellen, wobei die als eine Komponente des Bindemittels eingesetzte Phenolharz-Zusammensetzung enthaltend die Phenolharze vom Benzylethertyp einen sehr niedrigen freien Formaldehydgehalt aufweist und das Bindemittel zu hohen Festigkeiten führen soll.

### Zusammenfassung der Erfindung

Obige und weitere Aufgaben werden durch den Gegenstand der unabhängigen Patentansprüche gelöst werden. Vorteilhafte Weiterbildungen sind Gegenstand der Unteransprüche oder nachfolgend beschrieben.

Gegenstand der Erfindung ist ein Bindemittel enthaltend Phenolharze vom Benzylethertyp (enthalten vorzugsweise in der Polyol-Komponente) das nach Einsatz des Formaldehydfängers in Form einer beta-Dicarbonyl-Verbindung und der alpha-Carbonyl-Carboxyl-Verbindung einen freien Formaldehydgehalt relativ zur Phenolharz-Zusammensetzung von vorzugsweise kleiner 0,01 Gew.% aufweist.

Überraschenderweise wurde gefunden, dass der freie Formaldehydgehalt in Phenolharz-Zusammensetzungen als Ausgangskomponente derartiger Bindemittel nicht beliebig reduziert werden kann, ohne Nachteile in den Festigkeiten der daraus hergestellten Kerne und Formen in Kauf zu nehmen.

Je nach verwendeter Phenolharz-Zusammensetzung enthaltend neben dem Phenolharz vom Benzyletherharztyp ggf. Lösemittel und/oder Additive zeigt sich bei derart niedrigen Gehalten an freiem Formaldehyd in der Phenolharz-Zusammensetzung eine Reduzierung der Festigkeiten des daraus hergestellten ausgehärteten Bindemittels bzw. der ausgehärteten Formstoffmischung. Dieses ist nicht hinnehmbar. Überraschenderweise wurde nun gefunden, dass die Festigkeiten durch Zusatz einer Verbindung mit alpha-Carbonyl-Carboxyl-Struktur wieder (nahezu) auf das Niveau einer Phenolharz-Zusammensetzung mit höherem Gehalt an freiem Formaldehyd gebracht werden kann.

Die erfindungsgemäße Phenolharz-Zusammensetzung enthält somit:
- Phenolharze vom Benzylethertyp;
- zumindest eine oder mehrere formaldehydabsenkende Verbindung(en) mit beta-Dicarbonyl-Struktur (aufweisen zumindest zwei Carbonyl-Gruppen in 1,3-Stellung, wovon eine Gruppe eine Carbonylgruppe (-C=O) und die andere eine Carboxyl-Gruppe (-C(=O)(-O-)) ist, bzw. deren Umsetzungsprodukte mit Formaldehyd;
- zumindest eine oder mehrere Verbindung(en) mit alpha-Carbonyl-Carboxyl-Struktur (aufweisend zumindest eine Carbonyl-Gruppe in 2-Stellung zur Carboxyl-Gruppe), vorzugsweise Glyoxylsäure und deren Derivate bzw. deren Umsetzungsprodukte,
wobei der Gehalt an freiem Formaldehydgehalt in der Phenolharz-Zusammensetzung insbesondere kleiner 0,05 Gew.%, bevorzugt von 0,0490 Gew.% bis 0,0050 Gew.%, besonders bevorzugt von 0,0099 Gew.% bis 0,0025 Gew.% und insbesondere bevorzugt von 0,0090 Gew.% bis 0,0010 Gew.% beträgt.

Weiterhin betrifft die Erfindung Formstoffmischungen enthaltend das Bindemittel auf Basis von Phenolharzen vom Benzylethertyp, feuerfesten Formgrundstoff und Isocyanate und ggf. Katalysatoren und aus den Formstoffmischungen nach Härtung hergestellte Kerne, Formen und Speiser. Auch Gegenstand der Erfindung ist die Verwendung der Kerne, Formen und Speiser für den Metallguss, insbesondere den Eisen- sowie Aluminiumguss.

### Detaillierte Beschreibung der Erfindung

Zur Herstellung der Phenolharze vom Benzylethertyp sind alle herkömmlich verwendeten Phenol-Verbindungen geeignet. Neben unsubstituierten Phenolen können substituierte Phenole oder Gemische hiervon eingesetzt werden. Die Phenol-Verbindungen sind vorzugsweise entweder in beiden ortho-Positionen nicht substituiert oder in einer ortho- und in der para-Position nicht substituiert. Die verbleibenden Ring-Kohlenstoffatome können substituiert sein. Die Wahl des Substituenten ist nicht besonders beschränkt, sofern der Substituent die Reaktion des Phenols mit dem Aldehyd nicht nachteilig beeinflusst. Beispiele substituierter Phenole sind alkylsubstituierte, alkoxysubstituierte, arylsubstituierte und aryloxysubstituierte Phenole.

Die grundsätzliche Struktur eines Phenolharzes vom Benzylethertyp weist neben -CH₂- verknüpften Phenol-Einheiten -CH₂-O-CH₂- verknüpfte Phenol-Einheiten auf und lässt sich beispielhaft (in Bezug auf ein nur mit Formaldehyd umgesetztes Produkt) wie folgt darstellen:

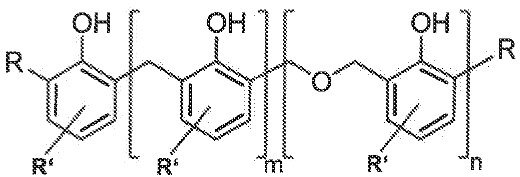

Die unterschiedlichen Einheiten sind typischerweise statistisch verteilt (d.h. auch in anderer Reihenfolge als oben dargestellt verknüpft). Die Phenol-Einheit kann z.T. auch para-verknüpft sein. Hierin ist R, R' jeweils unabhängig (insbesondere von m und n) Wasserstoff oder ein C1- bis C26- Kohlenwasserstoff-Substituent (gesättigt oder ungesättigt, geradkettig oder verzweigt) in ortho-, meta- oder paraStellung zur phenolischen Hydroxy-Gruppe; die Summe von m und n beträgt mindestens 2 und das Verhältnis m/n ist mindestens 1; R ist unabhängig Wasserstoff, -CH₂OH oder -CH₂O-R" mit R" = ein C1 bis C9 Kohlenwasserstoff. Der Rest R" kann geradkettig oder verzweigt, gesättigt oder ungesättigt sein.

Die vorstehend genannten Substituenten haben beispielsweise 1 bis 26, bevorzugt 1 bis 15 Kohlenstoffatome. Beispiele geeigneter Phenole sind o-Kresol, m-Kresol, p-Kresol, 3,5-Xylenol, 3,4-Xylenol, 3,4,5-Trimethylphenol, 3-Ethylphenol, 3,5-Diethylphenol, p-Butylphenol, 3,5-Dibutylphenol, p-Amylphenol, Cyclohexylphenol, p-Octylphenol, p-Nonylphenol, Cardanol, 3,5-Dicyclohexylphenol, p-Crotylphenol, p-Phenylphenol, 3,5-Dimethoxyphenol und p-Phenoxyphenol.

Besonders bevorzugt ist Phenol selbst, Auch höher kondensierte Phenole, wie Bisphenol A, sind geeignet. Darüber hinaus eignen sich auch mehrwertige Phenole, die mehr als eine phenolische Hydroxylgruppe aufweisen.

Bevorzugte mehrwertige Phenole weisen 2 bis 4 phenolische Hydroxylgruppen auf. Spezielle Beispiele geeigneter mehrwertiger Phenole sind Brenzkatechin, Resorcin, Hydrochinon, Pyrogallol, Phloroglucin, 2,5-Dimethylresorcin, 4,5-Dimethylresorcin, 5-Methylresorcin, Cardol oder 5-Ethylresorcin. Es können auch Gemische aus verschiedenen ein- und mehrwertigen und/oder substituierten und/oder kondensierten Phenolkomponenten für die Herstellung der Polyol-Komponente verwendet werden.

In einer Ausführungsform werden Phenole der allgemeinen Formel I: 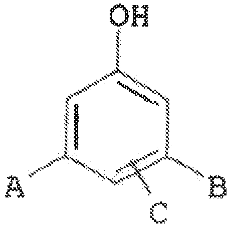 zur Herstellung der Phenolharz-Komponente verwendet, wobei A, B und C unabhängig voneinander ausgewählt sind aus: einem Wasserstoffatom, einem verzweigten oder unverzweigten Alkyl- oder Alkenylrest mit bis zu 3 Doppelbindungen, der beispielsweise 1 bis 26, vorzugsweise 1 bis 15 Kohlenstoffatome aufweisen kann, einem verzweigten oder unverzweigten Alkoxyrest, der beispielsweise 1 bis 26, vorzugsweise 1 bis 15 Kohlenstoffatome aufweisen kann, einem verzweigten oder unverzweigten Alkenoxyrest, der beispielsweise 1 bis 26, vorzugsweise 1 bis 15 Kohlenstoffatome aufweisen kann, einem Aryl- oder Alkylarylrest, wie beispielsweise Bisphenyle.

Als weiteres Aldehyd zur Herstellung der Phenolharze vom Benzylethertyp eignen sich neben Formaldehyd auch zusätzlich Aldehyde der Formel:

R-CHO

wobei R ein Kohlenstoffatomrest mit 1 bis 3 Kohlenstoffatomen, vorzugsweise einem Kohlenstoffatom ist. Spezielle Beispiele sind Acetaldehyd und Propionaldehyd. Besonders bevorzugt wird Formaldehyd eingesetzt, entweder in seiner wässrigen Form, als para-Formaldehyd, oder Trioxan.

Um Phenolharze vom Benzylethertyp zu erhalten, wird vorzugsweise eine mindestens äquivalente Molzahl an Aldehyd-Verbindung, bezogen auf die Molzahl der Phenol-Verbindungen, eingesetzt. Bevorzugt beträgt das Molverhältnis Aldehyd-Verbindung zu Phenol-Verbindung 1,05 : 1,0 bis 2,5 : 1, besonders bevorzugt 1,1 : 1 bis 2,2 : 1, insbesondere bevorzugt 1,2 : 1 bis 2,0 : 1.

Als weitere Reaktionskomponente können nach der EP 0177871 A2 aliphatische Monoalkohole mit ein bis acht Kohlenstoffatomen, insbesondere mit ein oder zwei Kohlenstoffatomen zugesetzt werden. Durch die Alkoxylierung sollen die Phenol-Formaldehyd-Harze eine erhöhte thermische Stabilität besitzen und eine längere Sandlebenszeit aufweisen.

Die Herstellung des Phenolharzes vom Benzylethertyp erfolgt nach für den Fachmann bekannten Verfahren. Dabei werden das Phenol und das Aldehyd in Gegenwart eines zweiwertigen Metallions, bei Temperaturen von vorzugsweise weniger als 130°C umgesetzt. Das entstehende Wasser wird abdestilliert. Dazu kann der Reaktionsmischung ein geeignetes Schleppmittel zugesetzt werden, beispielsweise Toluol oder Xylol, oder die Destillation wird bei reduziertem Druck durchgeführt.

Zur Herstellung von Phenolharzen vom Benzylethertyp geeignete Katalysatoren sind Salze zweiwertiger Ionen von Metallen, wie Mn, Zn, Cd, Mg, Co, Ni, Fe, Pb, Ca und Ba, insbesondere Zn-Salze. Bevorzugt wird Zinkacetat verwendet. Die eingesetzte Menge ist nicht kritisch. Typische Mengen an Metallkatalysator betragen 0,02 bis 0,3 Gew.%, bevorzugt 0,02 bis 0,18 Gew.%, bezogen auf die Gesamtmenge an Phenol-Verbindung und Aldehyd-Verbindung.

Solche Harze sind z.B. in US 3485797 und in EP 1137500 B1 beschrieben, auf deren Offenbarung hiermit sowohl hinsichtlich der Phenolharze vom Benzylethertyp selbst, als auch hinsichtlich ihrer Herstellung ausdrücklich Bezug genommen wird

Der freie Phenol-Gehalt beträgt, bezogen auf das Gewicht des Phenolharzes vom Benzylethertyp, vorzugsweise kleiner 12 Gew.%, besonders bevorzugt von kleiner 10 Gew.% oder sogar kleiner 2 Gew.%.

Nach einer weiteren Ausführungsform kann die Phenolharz-Zusammensetzung freies Saligenin enthalten, vorzugsweise beträgt das Gewichtsverhältnis von freiem Phenol zu freiem Saligenin von 1:1,1 bis 1:12 besonders bevorzugt von 1:1,5 bis 1:10 und insbesondere von 1:1,8 bis 1:8. "frei" in diesem Sinne meint "ungebunden" in der Zusammensetzung vorliegend.

Die erfindungsgemäß eingesetzten Formaldehydfänger sind CH-acide Verbindungen in Form von beta-Dicarbonylverbindungen (1,3- Dicarbonylverbindungen) (I) aufweisend eine oder mehrere der folgenden Gruppe(n):

R¹C(=O)-CH₂-C(=O)-O- (I)

worin
- R¹: H,
ein C1- bis C12- Kohlenwasserstoff, vorzugsweise ein C1- bis C7-Kohlenwasserstoff, oder
-CH₂-X ist, wobei X ein Rest ist, der neben Wasserstoff-Atomen, 1 bis 11 Kohlenstoff-Atome, vorzugsweise 1 bis 6 Kohlenstoff-Atome, und 1 bis 3 Sauerstoff-Atome enthält; beispielsweise kann Sauerstoff in Form von Ethergruppen enthalten sein. R¹ soll nicht mit einem Sauerstoffatom an den Carbonyl-Kohlenstoffatom gebunden sein. Beispiele für R¹ sind H, Alkyl, Alkenyl, Aryl, Alkylaryl oder Alkenylaryl.

Insbesondere weisen die beta-Dicarbonylverbindungen folgende Struktur: 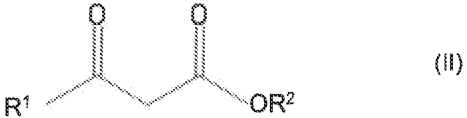 auf, worin
- R¹: die Bedeutung von oben hat, und
- R²: H,
ein C1- bis C14- Kohlenwasserstoff, vorzugsweise ein C1- bis C7- Kohlenwasserstoff ist, wobei ggfs. 1 bis 3 Sauerstoffatome in dem Kohlenwasserstoff enthalten sein können, beispielsweise in Form von Ethergruppen. Beispiele für R² sind Alkyl, Alkenyl, Aryl, Alkoxy, Alkenyloxy oder Aryloxy.

Reagiert die CH- acide CH₂ -Gruppe mit Formaldehyd, wandelt sich die CH₂ Gruppe z.B. in eine C(-H)(-CH₂-OH) bzw. -C(-CH₂-OH)₂ Gruppe um. Weitere Umsetzungsprodukte sind in der WO 2016/165916 A1 auf Seite 15 und 16 genannt.

Ebenfalls ist es möglich, dass die beta-Dicarbonyl-Verbindung eine Verbindung ist, die mehrere beta Dicarbonyl-Gruppen (I) aufweist, z.B. 2 bis 4, insbesondere solche nach Formel (II), die über R² verknüpft sind und somit mehrere CH acide Gruppen im Molekül aufweisen (vergleiche z.B. CAS: 22208-25-9).

CH-Acidität ist die Neigung einer Verbindung, das an einem Kohlenstoff-Atom gebundene Wasserstoff-Atome als Protonen abzugeben und damit formal als Säure zu agieren. Unsubstituierte Alkane weisen hohe pKS-Werte auf (z.B. ca. 50 für Ethan). Ist das Kohlenstoffatom jedoch an stark elektronenziehende Gruppen wie Carbonyle (in einem Ester, Keton oder Aldehyd) α-ständig zu diesen Gruppen gebunden, so sorgt der stark ausgeprägte negative induktive Effekt dafür, dass die CH- Bindung am α-Kohlenstoffatom stärker polarisiert und das Proton leichter abspaltbar wird. Nach der vorliegenden Erfindung ist der pks-Wert der CH-aciden CH₂-Gruppe vorzugsweise kleiner 15, insbesondere 5 bis 12.

Weniger geeignet sind z.B. Malonsäureester, wie z.B. Malonsäurediethylester oder Malonsäuredimethylester. Bevorzugt sind beta-Ketoester. Beispielhaft genannt seien folgende beta-Ketoester:
Methylacetoacetat (Acetessigsäuremethylester, Butan-3-onsäuremethylester CAS: 105-45-2), 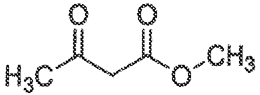
Ethylacetoacetat (Ethyl-3-oxobutyrat, 3-Oxobutansäureethylester, CAS: 141-97-9) 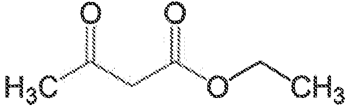 Isopropylacetoacetat (Isopropyl-3-oxobutanoat, CAS: 542-08-5) 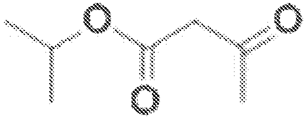
Isobutylacetoacetat (CAS: 7779-75-1) 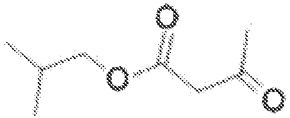
t-Butylacetoacetat (CAS: 1694-31-1), 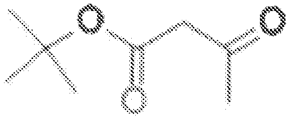
Benzylacetoacetat (CAS: 5396-89-4), 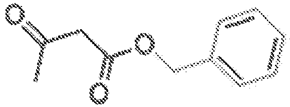
Dodecylacetoacetat (CAS: 52406-22-1), 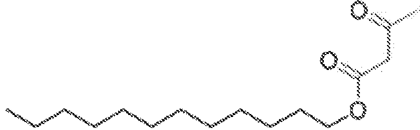
Ethylbenzoylacetat (CAS: 94-02-0), 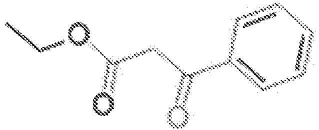
2-Methoxyethylacetoacetat (CAS: 22502-03-0), 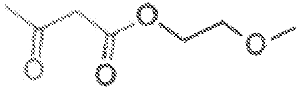
2-Acetoacetoxyethylmethacrylat (CAS: 21282-97-3), 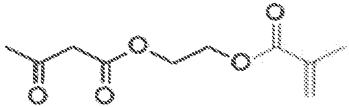
Methyl-4-methyl-3-oxopentanoat (CAS: 42558-54-3) und 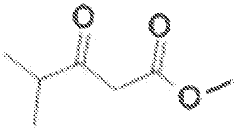
Trimethylolpropantrisacetoacetat (CAS: 22208-25-9):

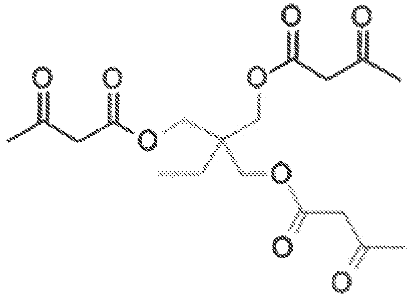

Besonders bevorzugt sind Methylacetoacetat, Ethylacetoacetat, Benzylacetoacetat, Dodecylacetoacetat, Ethylbenzoylacetat, 2-Methoxyethylacetoacetat, 2-(Acetoacetoxy)ethylmethacrylat und Trimethylolpropanitrisacetoacetat. Insbesondere bevorzugt ist Methlyacetoacetat, Ethylacetoacetat und Trimethylolproparnitrisacetoacetat .

Auch stickstoffhaltige beta-Dicarbonyl-Verbindungen (II) sind als Formaldehydfänger geeignet. beta-Dicarbonyl-Verbindungen (I) eingesetzt werden. Hier seien z.B. genannt:
N-Methylacetoacetamid (CAS: 20306-75-6) 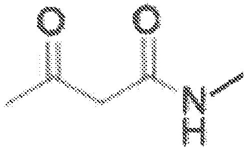
N,N-Dimethylacetoacetamid (CAS: 2044-64-6) 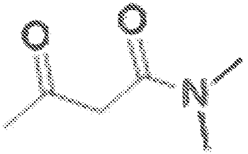
und N,N-Diethylacetoacetamid (CAS:2235-46-3).

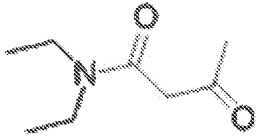

Weitere erfindungsgemäß einsetzbare Formaldehydfänger (III) enthalten Stickstoff im Molekül. Bevorzugt wird hier Harnstoff und insbesondere bevorzugt Ethylenharnstoff und/oder Propylenharnstoff verwendet. Diese können zusätzlich zu den beta-Dicarbonyl-Verbindungen (I) eingesetzt werden.

Kombinationen der genannten Formaldehydfängerklassen (I bis III) innerhalb einer Klasse und/oder untereinander sind möglich, solang zumindest eine beta-Dicarbonyl-Verbindung (I) eingesetzt wird.

Bevorzugt ist, dass das Phenolharz vom Benzylethertyp vor dem Zusatz des Formaldehydfängers bereits einen niedrigen freien Formaldehydgehalt aufweist. Dieser ist u.a. durch die Prozeßführung steuerbar, wodurch weniger Formaldehydfänger verwendet werden muss, um die Grenze von <0,01 Gew.% in der Phenolharz-Zusammensetzung sicher zu erreichen.

Die Grenze von 0,01 Gew% ist bedeutend, da unterhalb dieser Grenze der Phenolharzformulierung keine sensibilisierenden Eigenschaften (ausgelöst durch freies Formaldehyd) mehr zugeschrieben werden. Daher ist es im Sinne des Arbeitsschutzes erstrebenswert, den Gehalt an freiem Formaldehyd so weit wie technisch möglich zu reduzieren.

Der bevorzugte Gehalt an freiem Formaldehyd in der Phenolharz-Zusammensetzung oder auch nur das Phenolharz vom Benzylethertyp jeweils vor der Zugabe des Formaldehydfängers beträgt kleiner 0,25 Gew.%, bevorzugt 0,18 bis kleiner 0,25 Gew.%, und besonders bevorzugt 0,10 bis 0,20 Gew.%., jeweils bezogen (nur) auf das Phenolharz vom Benzylethertyp.

Durch die Prozeßführung ist der Wassergehalt des Benzyletherharzes steuerbar. Bevorzugt wird hier ein Gehalt von 0,2 bis 0,9 Gew.%, besonders bevorzugt von 0,3 bis 0,9 Gew.% und insbesondere bevorzugt von 0,4 bis 0,9 Gew.% eingestellt.

Die Herstellung des Phenolharzes vom Benzylethertyp erfolgt nach dem Fachmann bekannten Verfahren. Dabei werden das Phenol und das Aldehyd in Gegenwart eines zweiwertigen Metallions, bei Temperaturen von vorzugsweise weniger als 130°C umgesetzt. Das entstehende Wasser wird abdestilliert. Dazu kann der Reaktionsmischung ein geeignetes Schleppmittel zugesetzt werden, beispielsweise Toluol oder Xylol, oder die Destillation wird bei reduziertem Druck durchgeführt. Mittels des Schleppmittels oder einer Wasserdampf-Destillation kann die Konzentration des Phenols verändert (insbesondere minimiert) werden und damit auch das Verhältnis Phenol zu Saligenin verändert werden.

Zur Bestimmung des freien Formaldehyds in den erfindungsgemäßen niedrigen Konzentrationen kann man sich titrimetrischer Methoden nicht bedienen. Hier wird eine HPLC Methode durchgeführt:
Derivatisierung des Formaldehyds mit Acetylacetonat und Ammoniumacetat Puffer.
Detektor: UV-VIS 413 nm
Säulentemperatur: 50°C
Flußrate: 1,5 µl/min
Probenvoulmen: 15 µl
Säule: RP-Säule MZ-Analytical Spherisorb ODS-2, C 18 3 µm, Macherey-Nagel Niederdruckgradient: Wasser/Acetonitril in unterschiedlichen Gewichtsteilen

Die Menge an Formaldehydfänger in Bezug auf die beta-Dicarbonylverbindungen (I) ist nicht kritisch und kann z.B. bis zu 1,5 Gew.%, bevorzugt 0,1 bis 1,0 Gew.% und besonders bevorzugt von 0,15 bis 0,9 Gew.% bezogen auf dies Phenolharz-Zusammensetzung betragen.

Weiterhin eingesetzt wird eine alpha-Carbonyl-Carboxyl-Verbindung. Diese enthält mindestens eine Carbonyl-Gruppe (C=O) in alpha-Stellung (d.h. die 2-Position relativ zur Carboxyl-Gruppe) zu mindestens einer Carboxyl-Gruppe (-C(=O)-O-) und weist damit folgende Struktur auf:

R³-(C=O)-C(=O)-O-R⁴ (III)

wobei
- R³ und R⁴: unabhängig voneinander jeweils für H oder einen C1- bis C6-, insbesondere C1- bis C4- Kohlenwasserstoff stehen, z.B. Alkyl oder Alkenyl, vorzugsweise für H, CH₃ oder C₂H₅ insbesondere bevorzugt ist, dass zumindest ein R von R³ und R⁴ gleich H ist, bevorzugt beide.

Der Alkylrest kann linear oder verzweigt sein. Geeignet sind insbesondere:
Glyoxylsäure (CAS: 298-12-4), 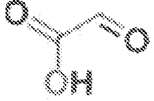
Glyoxysäureethylester (CAS: 924-44-7) 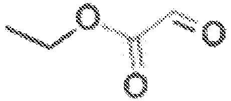
2-Ketobutansäure (CAS: 600-18-0) 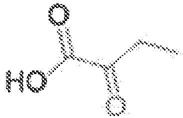
2-Ketobutansäuremethylester (CAS: 3952-66-7)

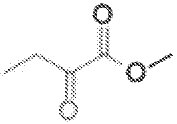

Bevorzugt wird Glyoxylsäure oder Ketobutansäure, insbesondere bevorzugt Glyoxylsäure, verwendet. Es können auch mehrere alpha-Carbonyl-Carboxyl-Verbindungen untereinander gemischt eingesetzt werden.

Die Menge an alpha-Carbonyl-Carboxyl-Verbindung ist nicht kritisch und kann z.B. 0,01 bis 1,0 Gew.%, bevorzugt von 0,02 bis 0,5 Gew.% und besonders bevorzugt von 0,04 bis 0,0999 Gew.%, bezogen auf die Phenolharz-Zusammensetzung betragen.

Besonders überraschend ist, dass durch Hinzuführung einer weiteren sauren Komponente, wie Glyoxylsäure in der Phenolharz-Zusammensetzung die Stabilität der Polyol-Komponente nicht vermindert wird und insbesondere der freie Formaldehydwert über die Zeit stabil niedrig bleibt.

Die Isocyanat-Komponente des Bindemittelsystems umfasst ein aliphatisches, cycloaliphatisches oder aromatisches monomeres - oder polymeres Isocyanat, bevorzugt mit im Mittel 2 bis 5 Isocyanatgruppen pro Molekül. Je nach den gewünschten Eigenschaften können auch Gemische von Isocyanaten eingesetzt werden.

Geeignete Isocyanate umfassen aliphatische Isocyanate, wie z.B. Hexamethylendiisocyanat, alicyclische Isocyanate wie z.B. 4,4'-Dicyclohexylmethandiisocyanat und Dimethylderivate hiervon. Beispiele geeigneter aromatischer Isocyanate sind Toluol-2,4-diisocyanat, Toluol-2,6-diisocyanat, 1,5-Naphthalendiisocyanat, Triphenylmethantriisocyanat, Xylylendiisocyanat und Methylderivate hiervon, sowie Po-lymethylenpolyphenylisocyanate. Bevorzugte Isocyanate sind aromatische Isocyanate, insbesondere bevorzugt sind Polymethylenpolyphenylpolyisocyanate wie z.B. technisches 4,4'-Diphenylmethandiisocyanat, d.h. 4,4'-Diphenylmethandiisocyanat mit einem Anteil an Isomeren und höheren Homologen.

Die Polyisocyanate können auch derivatisiert sein, indem zweiwertige Isocyanate derart miteinander umgesetzt werden, dass ein Teil ihrer Isocyanatgruppen zu Isocyanurat-, Biuret-, Allophanat-, Uretdion - oder Carbodiimidgruppen derivatisiert ist. Interessant sind z.B. Uretdion -Gruppen aufweisende Dimerisierungsprodukte, z.B. von MDI oder TDI. Derartige derivatisierte Polyisocyanate werden vorzugsweise aber nur als ein Bestandteil neben obigen nicht-derivatsierten Polyisocyanaten eingesetzt.

Bevorzugt wird das Isocyanat in einer Menge eingesetzt, dass die Anzahl der Isocyanatgruppen von 80 bis 120%, bezogen auf die Anzahl der freien Hydroxylgruppen des Harzes, beträgt.

Die Phenolharz-Komponente bzw. die Isocyanat-Komponente des Bindemittelsystems wird bevorzugt als Lösung in einem organischen Lösemittel oder einer Kombination von organischen Lösemitteln eingesetzt. Lösemittel können z.B. deshalb erforderlich sein, um die Komponenten des Bindemittels in einem ausreichend niedrigviskosen Zustand zu halten. Dieser ist u. a. erforderlich, um eine gleichmäßige Vernetzung des feuerfesten Formstoffes und dessen Rieselfähigkeit zu erhalten.

Als Lösemittel für die Phenolharz-Zusammensetzung können neben den z.B. unter der Bezeichnung Solvent Naphtha bekannten aromatischen Lösemitteln eingesetzt werden. Ausgehend von Benzol sind an dem aromatischen Ring unabhängig voneinander Alkyl- und/oder Alkenylgruppen substituiert, welche eine Kettenlänge von C1 bis C30, bevorzugt von C1 bis C20 und insbesondere bevorzugt von C1 bis C16 aufweisen. Unabhängig von einander können ein bis sechs Ringwasserstoffe des Benzols gegen ein Alkyl- und/oder Alkenylrest substituiert sein, bevorzugt werden 1 bis 4, besonders bevorzugt 1 bis 3 Ringwasserstoffe substituiert. Unabhängig davon kann die Alkyl- oder Alkenylkette geradkettig oder verzweigt sein.

Weiterhin können sauerstoffreiche polare, organische Lösemittel verwendet werden. Geeignet sind vor allem Dicarbonsäureester, Glykoletherester, Glykoldiester, Glykoldiether, cyclische Ketone, cyclische Ester (Lactone), cyclische Carbonate oder Kieselsäureester oder deren Mischungen. Bevorzugt werden Dicarbonsäureester, cyclische Ketone und cyclische Carbonate verwendet.

Typische Dicarbonsäureester weisen die Formel R^{I}OOC-R^{II}-COOR^{III} auf, wobei R^{II} und R^{III} jeweils unabhängig voneinander eine Alkylgruppe mit 1 bis 12, bevorzugt 1 bis 6, Kohlenstoffatomen darstellt und R^{II} eine Kohlenwasserstoffgruppe, geradkettig oder verzweigt, mit 1 bis 7 Kohlenstoffatomen ist. Beispiele sind Dimethylester von Carbonsäuren mit 4 bis 6 Kohlenstoffatomen, die z.B. unter der Bezeichnung Dibasic Ester von DuPont erhältlich sind.

Typische Glykoletherester sind Verbindungen der Formel R^{IV}-O-R^{V}-OOCR^{VI}, wobei R^{IV} eine Alkylgruppe mit 1 bis 4 Kohlenstoffatomen darstellt, R^{V} eine Kohlenwasserstoffgruppe mit 2 bis 4 Kohlenstoffatomen ist und R^{VI} eine Alkylgruppe mit 1 bis 3 Kohlenstoffatomen ist, z.B. Butylglykolacetat, bevorzugt sind Glykoletheracetate.

Typische Glykoldiester weisen entsprechend die allgemeine Formel R^{IV}COO-R^{V}-OOCR^{VI} auf, wobei R^{IV} bis R^{VI} wie oben definiert sind und die Reste jeweils unabhängig voneinander ausgewählt werden (z.B. Propylenglykoldiacetat). Bevorzugt sind Glykoldiacetate. Glykoldiether lassen sich durch die Formel R^{IV}-O- R^{V}-O-R^{VI} charakterisieren, in der R₃ bis R₅ wie oben definiert sind und die Reste jeweils unabhängig voneinander ausgewählt werden (z.B, Dipropylenglykoldimethylether).

Typische cyclische Ketone, cyclische Ester und cyclische Carbonate mit 4 bis 5 Kohlenstoffatomen sind ebenfalls geeignet (z.B. Propylencarbonat). Die Kohlenstoffe können verzweigt oder unverzweigt verknüpft sein und gesättigt oder ungesättigt vorliegen.

Geeignet sind auch Fettsäureester R^{VII}-OOCR^{VIII} mit R^{VIII} ein Kohlenwasserstoff von C8 bis 32, und R^{VII} ein Kohlenwasserstoff von C1 bis C9, insbesondere C1 bis C4, wie z.B. Rapsölfettsäuremethylester, Ölsäurebutylester und Isopropylester diverser Fettsäuren.

Geeignet sind auch Kieselsäureester, in ihrer monomeren Form oder als Oligomer, wie sie aus der WO 2009/130335 A2 bekannt sind. Geeignete Alkyl-/Alkoxy-Silane oder Alkyl-/Alkoxy-Siloxane sind z.B. Ester der Orthokieselsäure, in denen 1, 2 oder 3 Alkoholreste durch substituierte oder unsubstituierte Kohlenwasserstoffreste ersetzt sind, Verbindungen der Formel R^{IX}ₙSi(OR^{X})₄₋ₙ, worin n = 1, 2 oder 3 ist, wobei jede Gruppe R^{X} unabhängig von etwaigen weiteren Gruppen R^{X} einen organischen Rest bedeutet, bevorzugt verzweigtes oder unverzweigtes C1- bis C30-Alkyl oder Aryl, wie entsprechend in Zusammenhang mit dem ersten Aspekt definiert. R^{IX} ist hierbei ein substituierter oder unsubstituierter, verzweigter oder unverzweigter Kohlenwasserstoffrest und die Reste R^{IX} sind im Falle von n = 2 oder 3 gleich oder verschieden. Bevorzugt sind die Reste R^{IX} substituiertes oder unsubstituiertes, verzweigtes oder unverzweigtes C1- bis C30-Alkyl oder substituiertes oder unsubstituiertes Aryl und besonders bevorzugt substituiertes oder unsubstituiertes, verzweigtes oder unverzweigtes C1- bis C6-Alkyl oder substituiertes oder unsubstituiertes C6- bis C10-Aryl. Am meisten bevorzugt ist unsubstituiertes, verzweigtes oder unverzweigtes C1- bis C6-Alkyl oder unsubstituiertes Phenyl. Methyl und Ethyl sind hierin wiederum besonders bevorzugt.

Bevorzugt sind modifizierte Ester ausgewählt aus der Gruppe bestehend aus Monoalkyltrialkoxysilanen, Dialkyldialkoxysilanen, Trialkylmonoalkoxysilanen, Monoaryltrialkoxysilanen, Diaryldialkoxysilanen und Triarylmonoalkoxysilanen, wobei die Alkylgruppen bevorzugt C1 bis C6-Alkylgruppen sind. Bevorzugt sind modifizierte Ester ausgewählt aus der Gruppe bestehend aus Methyltrimethoxysilan, Methyltriethoxysilan, Methyltripropoxysilan, Methyltributoxysilan, Ethyltrimethoxysilan, Methyltriethoxysilan, Ethyltriethoxysilan, n-Propyltrimethoxysilan, n-Propy-Itriethoxysilan, Isopropyltrimethoxysilan, Isopropyltriethoxysilan, Vinyltrimethoxysilan, Vinyltriethoxysilan, 3-Glycidoxipropyltrimethoxysilan, 3-Glycidoxypropyltriethoxysilan, 3,4-Epoxycyclohexyltrimethoxysilan, Dimethoxydimethylsilan, Diethoxydimethylsilan, Diethyldimethoxysilan und Diethyldiethoxysilan. Besonders bevorzugt sind Tetraethylorthosilikat, Tetrapropylorthosilikat, deren Mischungen und deren Oligomere beziehungsweise Mischungen der Oligomere. Insbesondere bevorzugt sind Tetraethylortho- und Tetrapropylorthosilikat beziehungsweise deren Mischungen.

Als Lösemittel für das Isocyanat werden entweder aromatische Lösemittel, die oben genannten polaren Lösemittel oder Gemische davon eingesetzt. Auch Fettsäureester und Kieselsäureester sind geeignet.

Der Anteil des Lösemittels am Bindemittel (Phenolharz- plus Isocyanat-Komponente) kann bis zu 50 Gew.% betragen.

Neben den bereits erwähnten Bestandteilen können die Bindemittelsysteme weitere Additive enthalten, z. B. Silane (z.B. gemäß EP 1137500 B1), interne Trennmittel, z. B. Fettalkohole (z.B. gemäß US 4602069), trocknende Öle (z.B. gemäß US 4268425), Komplexbildner (z.B. gemäß US 5447968) und Additive zur Verlängerung der Verarbeitungszeit (z.B. gemäß US 4540724) oder Gemische davon.

Als feuerfester Formgrundstoff (nachfolgend auch kurz Formgrundstoff) können für die Herstellung von Gießformen übliche und bekannte Materialien sowie deren Mischungen verwendet werden. Geeignet sind beispielsweise Quarz-Sand, ZirkonSand, Chromerzsand, Olivin, Vermiculit, Bauxit, Schamotte sowie sogenannte künstliche Formgrundstoffe, also Formgrundstoffe, die durch industrielle Verfahren der Formgebung in sphärische oder annähernd sphärische (zum Beispiel ellipsoide) Form gebracht wurden.

Beispiele hierfür sind Glasperlen, Glasgranulat oder künstliche, spherische, keramische Sande - sogenannte Cerabeads^{®} aber auch Spherichrome^{®}, SpherOX^{®} oder "Carboaccucast", sowie Mikrohohlkugeln wie sie unter anderem als Komponente aus Flugaschen isoliert werden können, wie z.B. Aluminiumsilikathohlkugeln (sog. Microspheres). Mischungen der genannten Feuerfeststoffe sind ebenfalls möglich.

Besonders bevorzugt sind Formgrundstoffe, die mehr als 50 Gew.% Quarzsand bezogen auf den feuerfesten Formgrundstoff enthalten. Unter einem feuerfesten Formgrundstoff werden Stoffe verstanden, die einen hohen Schmelzpunkt (Schmelztemperatur) aufweisen. Vorzugsweise ist der Schmelzpunkt des feuerfesten Formgrundstoffs größer als 600°C, bevorzugt größer als 900°C, besonders bevorzugt größer als 1200°C und insbesondere bevorzugt größer als 1500°C.

Der feuerfeste Formgrundstoff macht vorzugsweise größer 80 Gew.% insbesondere größer 90 Gew.%, besonders bevorzugt größer 95 Gew.%, der Formstoffmischung aus.

Der mittlere Durchmesser der feuerfesten Formgrundstoffe liegt in der Regel zwischen 100 µm und 600 µm, bevorzugt zwischen 120 µm und 550 µm und besonders bevorzugt zwischen 150 µm und 500 µm. Die Partikelgröße lässt sich z.B. durch Siebung nach DIN ISO 3310 bestimmen. Besonders bevorzugt sind Teilchenformen mit größter Längenausdehnung zu kleinster Längenausdehnung (rechtwinkelig zueinander und jeweils für alle Raumrichtungen) von 1:1 bis 1:5 oder 1:1 bis 1:3, d.h. solche die z.B. nicht faserförmig sind.

Der feuerfeste Formgrundstoff weist vorzugsweise einen rieselfähigen Zustand auf, insbesondere um die erfindungsgemäße Formstoffmischung in üblichen Kernschießmaschinen verarbeiten zu können.

Geeignete Katalysatoren sind tertiäre Amine. Für das PUCB Verfahren werden flüchtige tertiäre Amine eingesetzt wie Trimethylamin ("TMA", CAS RN 75-50-3), Dimethylethylamin ("DMEA", CAS 75-64-9), Dimethylisopropylamin ("DMIPA", CAS 996-35-0), Dimethylpropylamin ("DMPA", CAS RN 926-63-6) und Triethylamin ("TEA", CAS RN 121-44-8).

Für das **PUNB** werden flüssige tertiäre Amine eingesetzt. Dies schließt bei Raumtemperatur (25 °C) flüssige tertiäre Amine ein als auch solche, welche nach Erwärmen auf z.B. 40 °C flüssig werden oder solche, die in einem geeigneten Lösungsmittel gelöst sind. Beispiele sind Tris(3-dimethylamino)propylamin, N-Methylimidazol, N-Ethylimidazol und 1-Methylbenzimidazol.

Außerdem betrifft die Erfindung ein Verfahren zur Herstellung der Formstoffmischungen umfassend
(a) Vermischen von feuerfesten Formgrundstoffen mit dem erfindungsgemäßen Bindemittel (umfassend zumindest die Phenolharz-Zusammensetzung und die Isocyanat-Komponente), in einer Menge von 0,2 bis 5 Gew.%, bevorzugt 0,3 bis 4 Gew.%, besonders bevorzugt 0,4 bis 3,5 Gew.%, bezogen auf die Menge der feuerfesten Formgrundstoffe, und einen gleichzeitig (beim PUNB Verfahren) oder separat später (beim PUCB Verfahren) zugesetzten Katalysator zum Erhalt einer Formstoffmischung,
(b) Einbringen der in Schritt (a) erhaltenen Formstoffmischung in ein Formwerkzeug;
(c) ggf. Zusetzen des separat später zugesetzten Katalysators (PUCB) und Härten der Formstoffmischung im Formwerkzeug mit dem erfindungsgemäßen Katalysator, um einen Kern oder eine Gießform zu erhalten; und
(d) anschließendes Trennen des Kerns oder der Gießform vom Werkzeug und ggf. weiteres Härten.

Für die Herstellung der Formstoffmischung können zuerst die Komponenten des Bindemittelsystems vereinigt und dann zu dem feuerfesten Formgrundstoff zugegeben werden. Es ist jedoch auch möglich, die Komponenten des Bindemittels gleichzeitig oder nacheinander in beliebiger Reihenfolge zu dem feuerfesten Formgrundstoff zu geben.

Um eine gleichmäßige Mischung der Komponenten der Formstoffmischung zu erzielen, können übliche Verfahren verwendet werden. Die Formstoffmischung kann zusätzlich gegebenenfalls andere konventionelle Bestandteile, wie Eisenoxid, gemahlene Flachsfasern, Holzmehlgranulate, Pech und refraktäre Metalle enthalten.

Erfindungsgemäß kann die Aushärtung nach dem PUCB- oder nach dem PUNB-Verfahren erfolgen. Im Falle des PUCB-Verfahrens wird zum Härten ein niedrigsiedendes tertiäres Amin mittels eines inerten Trägergases gasförmig oder als Aerosol durch die geformte Formstoffmischung geleitet. Die Zugabe eines separaten Katalysators unterbleibt. Es können alle bekannten Cold Box-Aminkatalysatoren verwendet werden. Im Falle des PUNB-Verfahrens kann der Amin- oder Metallkatalysator bereits im Bindemittel gelöst sein oder als separate Komponente dem Feuerfeststoff zugemischt werden, wobei die Zugabemenge ca. 0,1 Gew.% bis ca. 5 Gew.% bezogen auf die Formstoffmischung beträgt.

Die nach diesem Verfahren hergestellten Formkörper können an sich jede auf dem Gebiet der Gießerei übliche Form aufweisen. In einer bevorzugten Ausführungsform liegen die Formkörper in Form von Gießereiformen, Kernen oder Speisern vor. Diese zeichnen sich durch eine hohe mechanische Stabilität aus.

Weiter betrifft die Erfindung die Verwendung dieses Formkörpers für den Metallguss, insbesondere Eisen- sowie Aluminiumguss.

Die Erfindung wird im Weiteren anhand von bevorzugten Ausführungsformen bzw. Versuchsbeispielen näher erläutert.

### Versuchsbeispiele

Eingesetzte Komponenten (alle Prozent-Angaben meinen Gew. %).
Phenolharz vom Benzylethertyp 1 - o-Kresol/Phenol/Cardanol-Copolymer, welches durch folgende analytische Kennzahlen charakterisiert ist: Molgewicht (Mw) ca. 900 g/mol, OHZ: ca. 560 mg KOH/g, freier Phenolgehalt: 1,8%, Saligenin Gehalt: 3,8%., freier Formaldehydgehalt 0,17 Gew.%
ISOCYANAT KOMPONENTE 1 - homogene Mischung aus 80% Lupranat M 20 S und 20% lineares C₁₀₋₁₃ Alkylbenzol (CAS: 67774-74-7), Lieferant Sasol
ISOCYANAT KOMPONENTE 2: homogene Mischung aus 80% Lupranat M 20 S und 15% lineares C₁₀₋₁₃ Alkylbenzol (CAS: 67774-74-7) Lieferant Sasol und 5% Ethylacetoacetat
KATALYSATOR 706 - Dimethylpropylamin, Lieferant ASK Chemicals GmbH
Quarzsand H 32 - Lieferant Quarzwerke GmbH
MIRATEC DC 3 - wasserbasierte Schlichte, Auslaufzeit 12 s/4 mm Becher, Lieferant ASK Chemicals GmbH
LUPRANAT M 20 S: polymeres MDI, Funktionalität 2,6, Lieferant BASF SE
DBE - Dimethylester-Gemisch von C₄-C₆ Dicarbonsäuren, Lieferant DuPont
FSE - Fettsäureester z.B. destillierter Rapsölfettsäuremethylester oder Isopropy-Ilaurat 98%, Lieferant OLEON
Silan 2201 EQ - Ureidosilan 50%ig in Methanol, Lieferant Evonik Industries
Malonsäurediethylester - Lieferant Sigma Aldrich
Ethylacetoacetat (EAA) - Lieferant Sigma Aldrich
Trimethylolpropantrisacetoacetat - Lieferant Sigma Aldrich
Glyoxylsäure 50%ig in Wasser - Lieferant Sigma Aldrich
Synthro Stab TF 501 - 50%ige Ethylenharnstofflösung in Wasser Lieferant: Protex International
Fluorwasserstoffsäure 40%ig, Lieferant Sigma Aldrich
Ketobutansäure - Lieferant AppliChem GmbH
Palmer 1500-1, Gemisch aus Cardanol und Cardol, Lieferant Palmer International

### Benzyletherharz 2

In einem mit Rührwerk, Rückflusskühler und Thermometer ausgestatteten Reaktionsgefäß wurden 698,4 g Phenol (99%), 302,6 g Paraformaldehyd (91%) und 0,35 g Zinkacetat-Dihydrat vorgelegt. Unter Rühren wurde die Temperatur gleichmäßig innerhalb 60 Minuten auf 105 - 115 °C erhöht und so lange gehalten, bis ein Brechungsindex (25 °C) von 1,5590 erreicht wurde. Anschließend wurden 50 g Palmer 1500-1 zugegeben, der Kühler auf atmosphärische Destillation umgestellt und die Temperatur innerhalb einer Stunde auf 124 - 126°C gebracht. Bei dieser Temperatur wurde bis zum Erreichen eines Brechungsindex (25 °C) von 1,5940 weiterdestilliert. Danach wurde Vakuum angelegt und bei vermindertem Druck bis zu einem Brechungsindex (25 °C) von ca. 1,600 destilliert. Anschließend wurden pro 90 Gewichtsteile des erhaltenen Harzes mit 10 Gewichtsteilen n-Butanol versetzt und 60 Minuten unter Rückfluß bei 122-124 °C gehalten. Unter Vakuum wurde anschließend das nicht umgesetzte Butanol entfernt. Das Harz wies einen Brechungsindex (25°) von ca. 1,5970, einen freien Phenolgehalt von 9,8% und einen freien Formaldehydgehalt von 0,2 Gew.% auf.

Tabelle 1 und 2 zeigen die hergestellten Phenolharz-Zusammensetzungen auf Basis des Phenolharzes vom Benzylethertyp (Gewichtsteile). Der freie Formaldehydgehalt ist nach der weiter oben angegebenen HPLC Methode bestimmt worden.

In einem Hobart Mischer wurde eine Sandmischung aus Quarzsand H 32, plus 0,60% der oben genannten Binderzusammensetzungen (jeweils einzeln für die Beispiele A1 bis B6) und 0,60% ISOCYANAT KOMPONENTE 1 homogen über 2 Minuten vermischt. Diese Sandmischung wurde in eine Kernschießmaschine Modell Roeper H 1 überführt und es wurden jeweils zwei Kerne mit einer Dimension (l x b x h) von 220 mm x 22,4 mm x 22,4 mm mit einem Schießdruck von 4 bar mittels Druckluft in die Form gebracht. Mittels KATALYSATOR 706 (0,5 ml, Begasungszeit 10 s bei 2 bar Spüldruck) wurde der Sand ausgehärtet. Nach dem Aushärten wurde der Kern entnommen und mit einem Multiserw Biegegerät L Ru-2e die Festigkeit nach 15 Sekunden bestimmt.

Zur Ermittlung der Schlichtebeständigkeit, wurde ein 10 Minuten alter Kern in die Wasserschlichte MIRATEC DC 3 für 4 s getaucht und nach 30 Minuten Wartezeit bei Raumtemperatur (20 °C) gebrochen (Wert naß). Ein weiteres Kernpaar wurde nach dem Schlichten für 30 Minuten bei 150 °C in einem Umlufttrockenofen getrocknet. Nach 30 Minuten bei 150 °C wurde der Kern entnommen und nach Abkühlen auf Raumtemperatur im Multiserw Gerät die Biegefestigkeit bestimmt.

Tabelle 3: zeigt die Festigkeiten (in N/cm²) für Mischungen hergestellt aus dem Benzyletherharz 1. 98% steht für die Luftfeuchtigkeit.

**Tabelle 3**

| | | | | Wasserschlichte | |
|---|---|---|---|---|---|
| Phenolharzkomponente | sofort 15" | 24h | 24h 98% | naß | trocken |
| A 1 | 185 | 328 | 267 | 268 | 387 |
| A 2 | 182 | 325 | 270 | 265 | 388 |
| A 3 | 186 | 330 | 255 | 260 | 375 |
| A 4 | 160 | 240 | 80 | 91 | 166 |
| B 1 | 180 | 315 | 205 | 221 | 328 |
| B 2 | 180 | 322 | 218 | 223 | 335 |
| B 3 | 180 | 330 | 221 | 228 | 346 |
| B 4 | 178 | 331 | 211 | 215 | 350 |
| B 5 | 175 | 328 | 221 | 230 | 356 |
| B 6 | 180 | 326 | 218 | 222 | 358 |

Aus den Tabellen 1-3 geht hervor, dass durch die Zugabe der beta-Ketoester die Grenze von 0,01 Gew.% freiem Formaldehyd erreicht wird. Dabei reduzieren sich insbesondere die 24h Festigkeiten, diese können überraschenderweise durch Zusatz von Glyoxylsäure oder Ketobutansäure wieder erhöht werden. Auch zeigen die Tabellen 1 und 3, dass durch Malonsäureethyleester (Beispiel A2) zwar brauchbare Festigkeiten erreicht werden, aber der freie Formaldehydgehalt nicht unter die gewünschte Grenze von <0,01 Gew.% reduziert werden kann.

Verwendet man für die Beispiele A1 bis A4 und B1 bis B6 die ISOCYANAT KOMPONENTE 2, anstelle des ISOCYANAT KOMPONENTE 1, so ergeben sich dieselben Trends wie in Tabelle 3 gezeigt für die Bestimmung der Festigkeiten.

**Tabelle 1**

| | nicht erfindungsgemäß | | | | erfindungsgemäß | | | | | |
|---|---|---|---|---|---|---|---|---|---|---|
| | A 1 | A2 | A 3 | A 4 | B 1 | B 2 | B 3 | B 4 | B 5 | B 6 |
| Benzyletherharz 1 | 50,00 | 50,00 | 50,00 | 50,00 | 50,00 | 50,00 | 50,00 | 50,00 | 50,00 | 50,00 |
| DBE | 24,70 | 23,70 | 24,50 | 24,35 | 24,45 | 24,25 | 24,05 | 23,85 | 24,00 | 24,15 |
| FSE | 24,70 | 23,70 | 24,50 | 24,35 | 24,35 | 24,25 | 24,05 | 23,85 | 24,00 | 24,15 |
| Malonsäurediethylester | | 2,00 | | | | | | | | |
| EAA | | | | 0,70 | 0,40 | 0,70 | 0,70 | 0,70 | 1,20 | 0,40 |
| Synthro Stab TF 501 | | | | | | | | | | 0,50 |
| Silan 2201 EQ | 0,50 | 0,50 | 0,50 | 0,50 | 0,50 | 0,50 | 0,50 | 0,50 | 0,50 | 0,50 |
| Fluorwasserstoffsäure 40%ig | 0,10 | 0,10 | 0,10 | 0,10 | 0,10 | 0,10 | 0,10 | 0,10 | 0,10 | 0,10 |
| Glyoxylsäure 50%ig | | | 0,40 | | 0,20 | 0,20 | 0,60 | 1,00 | 0,20 | 0,20 |
| freier Formaldehydgehalt (%) | 0,085 | 0,040 | 0,082 | 0,003 | 0,009 | 0,005 | 0,004 | 0,004 | 0,001 | 0,002 |

**Tabelle 2**

| | nicht erfindungsgemäß | erfindungsgemäß | | | | | | |
|---|---|---|---|---|---|---|---|---|
| | A 5 | B7 | B 8 | B 9 | B 10 | B 11 | B 12 | B 13 |
| Benzyletherharz 2 | 50,00 | 50,00 | 50,00 | 50,00 | 50,00 | 50,00 | 50,00 | 50,00 |
| DBE | 24,70 | 24,25 | 24,15 | 23,80 | 24,25 | 24,15 | 23,80 | 23,80 |
| FSE | 24,70 | 24,25 | 24,15 | 23,80 | 24,25 | 24,15 | 23,80 | 23,80 |
| Trimethylolpropantrisacetoacetat | | | | | 0,70 | 0,90 | 1,20 | |
| EAA | | 0,70 | 0,90 | 1,20 | | | | 0,70 |
| Silan 2201 EQ | 0,50 | 0,50 | 0,50 | 0,50 | 0,50 | 0,50 | 0,50 | 0,50 |
| Fluorwasserstoffsäure 40%ig | 0,10 | 0,10 | 0,10 | 0,10 | 0,10 | 0,10 | 0,10 | 0,10 |
| Glyoxylsäure 50%ig | | 0,20 | 0,20 | 0,60 | 0,20 | 0,20 | 0,60 | |
| Ketobutansäure | | | | | | | | 0,20 |
| freier Formaldehydgehalt (%) | 0,099 | 0,009 | 0,007 | 0,006 | 0,009 | 0,006 | 0,005 | 0,009 |

## Patentansprüche

1. Phenolharz-Zusammensetzung aufweisend zumindest:
- eine Polyol-Komponente, wobei die Polyol-Komponente ein Phenolharz vom Benzylethertyp ist;
- eine beta-Dicarbonyl-Verbindung beinhaltend folgende Gruppe:
R¹C(=O)-CH₂-C(=O)-O- (I)
worin
R¹ H,
ein C1- bis C12- Kohlenwasserstoff, vorzugsweise ein C1- bis C7-Kohlenwasserstoff, oder
-CH₂-X ist, wobei X ein Rest ist, der neben Wasserstoff-Atomen, 1 bis 11 Kohlenstoff-Atome, vorzugsweise 1 bis 6 Kohlenstoff-Atome, und 1 bis 3 Sauerstoff-Atome enthält
als Formaldehydfänger, bzw. deren Umsetzungsprodukt(e) mit Formaldehyd; und
- eine alpha-Carbonyl-Carboxyl-Verbindung mit folgender Struktur
R³O-(O=)C-C(=O)-R⁴ (III)
worin
R³ und R⁴ unabhängig voneinander jeweils für H oder einen C1- bis C6-Kohlenwasserstoff, insbesondere C1- bis C4- Kohlenwasserstoff, stehen.

2. Phenolharz-Zusammensetzung nach Anspruch 1, wobei der Gehalt an freiem Formaldehyd von 0 Gew.% bis 0,25 Gew.%, bevorzugt 0,001 Gew.% bis kleiner 0,1 Gew.% und besonders bevorzugt von 0,001 Gew.% bis kleiner 0,01 Gew.% in der Phenolharz-Zusammensetzung beträgt.

3. Phenolharz-Zusammensetzung nach zumindest einem der vorhergehenden Ansprüche, wobei die beta-Dicarbonyl-Verbindung ausgewählt ist aus einem oder mehreren Mitgliedern der Gruppe:
Methylacetoacetat, Ethylacetoacetat, Isopropylacetoacetat, Isobutylacetoacetat, t-Butylacetoacetat, Benzylacetoacetat, Dodecylacetoacetat, Ethylbenzoylacetat, 2-Methoxyethylacetoacetat, 2-Acetoacetoxyethylmethacrylat, Methyl-4-methyl-3-oxopentanoat, und Trimethylolpropantrisacetoacetat.

4. Phenolharz-Zusammensetzung nach zumindest einem der vorhergehenden Ansprüche, wobei
- die alpha-Carbonyl-Carboxyl-Verbindung ausgewählt ist aus einem oder mehreren Mitgliedern der Gruppe: Glyoxylsäure, Glyoxysäureethylester, 2-Ketobutansäure und 2-Ketobutansäuremethylester;
und/oder
- die alpha-Carbonyl-Carboxyl-Verbindung in der Zusammensetzung in einer Menge von bis zu 1,0 Gew.%, bevorzugt 0,01 bis 0,5 Gew.% und besonders bevorzugt von 0,02 bis 0,0999 Gew.% enthalten ist.

5. Phenolharz-Zusammensetzung nach zumindest einem der vorhergehenden Ansprüche, wobei das Phenolharz vom Benzylethertyp
- einen Wassergehalt von 0,2 bis 0,9 Gew.%, besonders bevorzugt von 0,3 bis 0,9 Gew.% und insbesondere bevorzugt von 0,4 bis 0,9 Gew.% aufweist; und/oder
- eine OH-Zahl nach DIN 53240 von 500 bis 900 mg KOH/g, vorzugsweise von 550 bis 850 mg KOH/g und insbesondere bevorzugt von 560 bis 750 mg KOH/g aufweist;
und/oder
- ein mittleres Molekulargewicht bestimmt als Gewichtsmittel nach DIN 5567-1 mittels GPC von 500 bis 1100 g/mol und insbesondere 550 bis 1000 g/mol und insbesondere bevorzugt von 560 bis 980 g/mol aufweist, gerechnet ohne Phenol und monomere Phenol-Formaldehyd-Additionsprodukte.

6. Phenolharz-Zusammensetzung nach zumindest einem der vorhergehenden Ansprüche, wobei die beta-Dicarbonyl-Verbindung bzw. deren Umsetzungsprodukt in der Zusammensetzung in einer Menge von bis zu 1,5 Gew.%, bevorzugt 0,1 bis 1,0 Gew.% und besonders bevorzugt von 0,15 bis 0,9 Gew. % enthalten ist.

7. Phenolharz-Zusammensetzung nach zumindest einem der vorhergehenden Ansprüche, wobei die Phenolharz-Zusammensetzung einen freien Phenol-Gehalt von kleiner 12 Gew.%, bevorzugt von kleiner 10 Gew.% und besonders bevorzugt von kleiner 2 Gew.% aufweist, jeweils bezogen auf das Phenolharz vom Benzylethertyp.

8. Phenolharz-Zusammensetzung nach zumindest einem der vorhergehenden Ansprüche, wobei die Phenolharz-Zusammensetzung weiterhin Saligenin enthält, insbesondere in einem Gewichtsverhältnis von freiem Phenol zu Saligenin von 1:1,1 bis 1:12, besonders bevorzugt von 1:1,5 bis 1:10 und ganz besonders bevorzugt von 1:1,8 bis 1:8.

9. Phenolharz-Zusammensetzung nach zumindest einem der vorhergehenden Ansprüche, wobei das Lösungsmittel für die Polyolkomponente Dicarbonsäureester und/oder Fettsäureester ist und vorzugsweise kleiner 10 Gew.% aromatische Lösungsmittel enthält.

10. Phenolharz-Zusammensetzung nach zumindest einem der vorhergehenden Ansprüche, wobei die Phenolharz-Zusammensetzung
- 30 bis 90 Gew.%, vorzugsweise 35 bis 85 Gew.% und insbesondere 40 bis 80 Gew.% Phenolharz vom Benzylethertyp enthält;
und/oder
- zu größer 95 Gew.% ausschließlich Phenolharz vom Benzylethertyp und Lösungsmittel einschließlich etwaigem Verdünnungsmittel enthält.

11. Bindemittezusammensetzung enthaltend zumindest:
- die Phenolharz-Zusammensetzung gemäß zumindest einem der vorhergehenden Ansprüche; und
- eine Isocyanat-Komponente aus einem oder mehreren Isocyanat-Verbindungen mit zumindest 2 Isocyanat-Gruppen pro Molekül.

12. Bindemittel nach Anspruch 11, wobei das Bindemittel enthält, auch unabhängig voneinander,
- 8 bis 70 Gew.%, insbesondere 10 bis 62 Gew.%, Phenolharz vom Benzylethertyp;
- 13 bis 78 Gew.%, insbesondere 17 bis 70 Gew.%, Isocyanat-Verbindungen; und
- 2 bis 57 Gew.%, insbesondere 3 bis 53 Gew.%, Lösungsmittel für das Phenolharz vom Benzylethertyp und die Isocyanat-Verbindungen.

13. Formstoffmischung enthaltend die Komponenten des Bindemittels nach zumindest einem der vorhergehenden Ansprüche 11 oder 12 und einen feuerfesten Formgrundstoff, wobei der feuerfeste Formgrundstoff ausgewählt ist aus einem oder mehreren Mitgliedern der Gruppe Olivin, Schamotte, Bauxit, Aluminiumsilikathohlkugeln, Glasperlen, Glasgranulat, synthetischen keramischen Formgrundstoffen und Siliciumdioxid, insbesondere in der Form von Quarzsand, Zirkonsand oder Chromerzsand.

14. Formstoffmischung nach Anspruch 13, wobei das Bindemittel als Kit vorliegt umfassend getrennt voneinander zumindest die Isocyanat-Verbindungen als eine Komponente und das Phenolharz vom Benzylethertyp als weitere Komponente.

15. Verfahren zur Herstellung eines Formkörpers als Gießform, Kern oder Speiser, umfassend
(i) Herstellen der Formstoffmischung gemäß zumindest einem der Ansprüche 13 oder 14;
(ii) Einbringen der Formstoffmischung oder deren Bestandteile in ein Formwerkzeug;
(iii) Härten der Formstoffmischung in dem Formwerkzeug mit zumindest einem tertiären Amin, um einen gehärteten selbsttragenden Formkörper zu erhalten; und
(iv) anschließendes Trennen des gehärteten selbsttragenden Formkörpers vom Formwerkzeug und ggf. weiteres Härten, wodurch man einen ausgehärteten Formkörper erhält.

16. Verfahren nach Anspruch 15, wobei das tertiäre Amin ausgewählt ist aus einem oder mehreren Mitgliedern der Gruppe: Trimethylamin, Dimethylethylamin, Dimethyl-n-propylamin, Dimethyl-iso-propylamin, Diethylmethylamin, Triethylamin, Tri-n-propylamin, Tri-isopropylamin, Tri-n-butylamin, Tri-isobutylamin, Tris(3-dimethylamino)propylamin, N-Methylimidazol, N-Ethylimidazol und 1-Methylbenzimidazol.

17. Gießform, Kern oder Speiser hergestellt nach dem Verfahren der Ansprüche 15 oder 16.

18. Verwendung der Gießform oder des Kerns hergestellt nach dem Verfahren der Ansprüche 15 oder 16 zum Metallguss, insbesondere Eisen- oder Aluminium-Guss.

## Claims

1. Phenolic resin composition comprising at least:
- a polyol component, wherein the polyol component is a phenolic resin of the benzyl ether type;
- a beta-dicarbonyl compound comprising the following group:
R¹C(=O)-CH₂-C(=O)-O- (I)
wherein
R¹ is H,
is a C1 to C12 hydrocarbon, preferably a C1 to C7 hydrocarbon, or
is -CH₂-X, wherein X is a residue which, in addition to hydrogen atoms, contains 1 to 11 carbon atoms, preferably 1 to 6 carbon atoms, and 1 to 3 oxygen atoms,
as a formaldehyde scavenger and/or reaction product(s) with formaldehyde thereof; and
- an alpha-carbonyl-carboxyl compound with the following structure
R³O-(O=)C-C(=O)-R⁴ (III)
wherein
and R⁴ independently of one another, each is H or a C1 to C6 hydrocarbon, in particular C1 to C4 hydrocarbon.

2. Phenolic resin composition according to claim 1, wherein the content of free formaldehyde is from 0 wt% to 0.25 wt%, preferably 0.001 wt% to less than 0.1 wt% and particularly preferred from 0.001 wt% to less than 0.01 wt% in the phenolic resin composition.

3. Phenolic resin composition according to at least one of the preceding claims, wherein the beta-dicarbonyl compound is selected from one or more members of the group:
methyl acetoacetate, ethyl acetoacetate, isopropyl acetoacetate, isobutyl acetoacetate, t-butyl acetoacetate, benzyl acetoacetate, dodecyl acetoacetate, ethyl benzoylacetate, 2-methoxyethyl acetoacetate, 2-acetoacetoxyethyl methacrylate, methyl-4-methyl-3-oxopentanoate, and trimethylolpropane triacetoacetate.

4. Phenolic resin composition according to at least one of the preceding claims, wherein
- the alpha-carbonyl-carboxyl compound is selected from one or more members of the group: glyoxylic acid, glyoxylic acid ethyl ester, 2-ketobutanoic acid and 2-ketobutanoic acid methyl ester;
and/or
- the alpha-carbonyl-carboxyl compound is present in the composition in an amount of up to 1.0 wt%, preferably 0.01 to 0.5 wt% and particularly preferred 0.02 to 0.0999 wt%.

5. Phenolic resin composition according to at least one of the preceding claims, wherein the phenolic resin of the benzyl ether type has
- a water content of 0.2 to 0.9 wt%, particularly preferred of 0.3 to 0.9 wt% and especially preferred of 0.4 to 0.9 wt%;
and/or
- an OH number according to DIN 53240 of 500 to 900 mg KOH/g, preferably of 550 to 850 mg KOH/g and particularly preferred of 560 to 750 mg KOH/g;
and/or
- an average molecular weight determined as a weight average according to DIN 5567-1 by means of GPC of 500 to 1100 g/mol and in particular 550 to 1000 g/mol and in particular preferably of 560 to 980 g/mol, calculated without phenol and monomeric phenol-formaldehyde addition products.

6. Phenolic resin composition according to at least one of the preceding claims, wherein the beta-dicarbonyl compound and/or the reaction product thereof is contained in the composition in an amount of up to 1.5 wt%, preferably 0.1 to 1.0 wt% and particularly preferred 0.15 to 0.9 wt%.

7. Phenolic resin composition according to at least one of the preceding claims, wherein the phenolic resin composition has a free phenol content of less than 12 wt%, preferably less than 10 wt% and particularly preferred less than 2 wt%, in each case based on the phenolic resin of the benzyl ether type.

8. Phenolic resin composition according to at least one of the preceding claims, wherein the phenolic resin composition further comprises saligenin, in particular in a weight ratio of free phenol to saligenin of 1:1.1 to 1:12, more preferably of 1:1.5 to 1:10 and most preferably of 1:1.8 to 1:8.

9. Phenolic resin composition according to at least one of the preceding claims, wherein the solvent for the polyol component is a dicarboxylic acid ester and/or a fatty acid ester and preferably contains less than 10 wt% of aromatic solvents.

10. Phenolic resin composition according to at least one of the preceding claims, wherein the phenolic resin composition
- comprises 30 to 90 wt%, preferably 35 to 85 wt% and in particular 40 to 80 wt% phenol resin of the benzyl ether type;
and/or
- comprises more than 95 wt% exclusively phenol resin of the benzyl ether type and solvent, including optionally present diluent.

11. Binder composition comprising at least:
- the phenolic resin composition according to at least one of the preceding claims; and
- an isocyanate component comprising one or more isocyanate compounds with at least 2 isocyanate groups per molecule.

12. Binder according to claim 11, wherein the binder contains, also independently of one another,
- 8 to 70 wt%, in particular 10 to 62 wt%, of phenolic resin of the benzyl ether type;
- 13 to 78 wt%, in particular 17 to 70 wt%, of isocyanate compounds; and
- 2 to 57 wt%, in particular 3 to 53 wt%, solvent for the phenolic resin of the benzyl ether type and the isocyanate compounds.

13. Molding material mixture containing the components of the binder according to at least one of the preceding claims 11 or 12 and a refractory molding base material, wherein the refractory molding base material is selected from one or more members of the group consisting of olivine, chamotte, bauxite, aluminum silicate hollow spheres, glass beads, glass granulate, synthetic ceramic molding base materials, and silicon dioxide, in particular in the form of quartz sand, zircon sand, or chrome ore sand.

14. Molding material mixture according to claim 13, wherein the binder is present as a kit comprising, separately from one another, at least the isocyanate compounds as one component and the phenolic resin of the benzyl ether type as a further component.

15. Method for producing a molded body as a casting mold, core, or feeder, comprising
(i) preparing the molding material mixture according to at least one of claims 13 or 14;
(ii) introducing the molding material mixture or its components into a molding tool;
(iii) hardening the molding material mixture in the molding tool with at least one tertiary amine to obtain a hardened, self-supporting molded body;
and
(iv) subsequently separating the hardened, self-supporting molded body from the molding tool and, optionally further hardening thereby obtaining a cured molded body.

16. Method according to claim 15, wherein the tertiary amine is selected from one or more members of the group: trimethylamine, dimethylethylamine, dimethyl-n-propylamine, dimethyl-iso-propylamine, diethylmethylamine, triethylamine, tri-n-propylamine, tri-isopropylamine, tri-n-butylamine, triisobutylamine, tris(3-dimethylamino)propylamine, N-methylimidazole, N-ethylimidazole, and 1-methylbenzimidazole.

17. Casting mold, core, or feeder manufactured according to the method of claims 15 or 16.

18. Use of the casting mold or core manufactured according to the method of claims 15 or 16 for metal casting, in particular iron or aluminium casting.

## Revendications

1. - Composition de résine phénolique présentant au moins :
- un composant polyol, le composant polyol étant une résine phénolique du type éther benzylique ;
- un composé bêta-dicarbonyle contenant le groupe suivant :
R¹C(=O)-CH₂-C(=O)-O- (I)
où R¹ est H, un hydrocarbure en C1 à C12, de préférence un hydrocarbure en C1 à C7, ou
-CH₂-X, où X est un résidue qui, en dehors d'atomes d'hydrogène, contient 1 à 11 atomes de carbone, de préférence 1 à 6 atomes de carbone, et 1 à 3 atomes d'oxygène
comme piégeur de formaldéhyde, ou son(ses) produit(s) de réaction avec le formaldéhyde ;
- un composé alpha-carbonyle-carboxyle ayant la structure suivante
R³O-(O=)C-C(=O)-R⁴ (III)
où et R⁴ représentent chacun, indépendamment l'un de l'autre, H ou un hydrocarbure en C1 à C6, en particulier hydrocarbure en C1 à C4.

2. - Composition de résine phénolique selon la revendication 1, dans laquelle la teneur en formaldéhyde libre s'élève à 0 % en poids à 0,25 % en poids, de préférence à 0,001 % en poids à moins de 0,1 % en poids et de façon particulièrement préférée à 0,001 % en poids à moins de 0,01 % en poids dans la composition de résine phénolique.

3. - Composition de résine phénolique selon au moins l'une des revendications précédentes, dans laquelle le composé bêta-dicarbonyle est choisi parmi un ou plusieurs membres du groupe : acétoacétate de méthyle, acétoacétate d'éthyle, acétoacétate d'isopropyle, acétoacétate d'isobutyle, acétoacétate de t-butyle, acétoacétate de benzyle, acétoacétate de dodécyle, acétoacétate d'éthylbenzoyle, acétoacétate de 2-méthoxyéthyle, méthacrylate de 2-acétoacétoxyéthyle, 4-méthyl-3-oxopentanoate de méthyle et trisacétoacétate de triméthylolpropane.

4. - Composition de résine phénolique selon au moins l'une des revendications précédentes, dans laquelle :
- le composé alpha-carbonyle-carboxyle est choisi parmi un ou plusieurs membres du groupe : acide glyoxylique, ester éthylique d'acide glyoxylique, acide 2-cétobutanoïque et ester méthylique d'acide 2-cétobutanoïque.
et/ou
- le composé alpha-carbonyle-carboxyle est contenu dans la composition dans une quantité allant jusqu'à 1,0 % en poids, de préférence de 0,01 à 0,5 % en poids et de façon particulièrement préférée de 0,02 à 0,0999 % en poids.

5. - Composition de résine phénolique selon au moins l'une des revendications précédentes, dans laquelle la résine phénolique du type éther benzylique
- présente une teneur en eau de 0,2 à 0,9 % en poids, de façon particulièrement préférée de 0,3 à 0,9 % en poids et de façon tout particulièrement préférée de 0,4 à 0,9 % en poids ;
et/ou
- présente un indice d'OH selon DIN 53240 de 500 à 900 mg KOH/g, de préférence de 550 à 850 mg KOH/g et de façon particulièrement préférée de 560 à 750 mg KOH/g ; et/ou
- présente une masse moléculaire moyenne en tant que moyenne en poids selon DIN 5567-1 par CPG de 500 à 1100 g/mol et en particulier de 550 à 1000 g/mol et de façon particulièrement préférée de 560 à 980 g/mol, calculée sans phénol et produits d'addition phénol-formaldéhyde monomères.

6. - Composition de résine phénolique selon au moins l'une des revendications précédentes, dans laquelle le composé bêta-dicarbonyle ou son produit de réaction est contenu dans la composition dans une quantité allant jusqu'à 1 ,5 % en poids, de préférence de 0,1 à 1,0 % en poids et de façon particulièrement préférée de 0,15 à 0,9 % en poids.

7. - Composition de résine phénolique selon l'une au moins l'une des revendications précédentes, dans laquelle la composition de résine phénolique présente une teneur en phénol libre inférieure à 12 % en poids, de préférence inférieure à 10 % en poids et de façon particulièrement préférée inférieure à 2 % en poids, dans chaque cas par rapport à la résine phénolique de type éther benzylique.

8. - Composition de résine phénolique selon l'une au moins l'une des revendications précédentes, dans laquelle composition de résine phénolique contient en outre de la saligénine, en particulier dans un rapport pondéral du phénol libre à la saligénine de 1:1,1 à 1:12, de façon particulièrement préférée de 1:1,5 à 1:10 et de façon tout particulièrement préférée de 1:1,8 à 1:8.

9. - Composition de résine phénolique selon au moins l'une des revendications précédentes, dans laquelle le solvant pour le composant polyol est un ester d'acide dicarboxylique et/ou un ester d'acide gras et contient de préférence moins de 10 % en poids de solvants aromatiques.

10. - Composition de résine phénolique selon au moins l'une des revendications précédentes, dans laquelle la composition de résine phénolique
- contient 30 à 90 % en poids, de préférence 35 à 85 % en poids et en particulier 40 à 80 % en poids de résine phénolique du type éther benzylique ;
et/ou
- contient à plus de 95 % en poids exclusivement de résine phénolique du type éther benzylique et de solvant, incluant un éventuel diluant.

11. - Composition de liant contenant au moins :
- la composition de résine phénolique selon au moins l'une des revendications précédentes ; et
- un composant isocyanate constitué d'un ou plusieurs composés isocyanates ayant au moins 2 groupes isocyanate par molécule.

12. - Liant selon la revendication 11, dans lequel le liant contient, également indépendamment les uns des autres,
- 8 à 70 % en poids, en particulier 10 à 62 % en poids, de résine phénolique du type éther benzylique ;
- 13 à 78 % en poids, en particulier 17 à 70 % en poids, de composés isocyanates ; et
- 2 à 57 % en poids, en particulier 3 à 53 % en poids, de solvant pour la résine phénolique du type éther benzylique et les composés isocyanates.

13. - Mélange de matières à mouler contenant les composants du liant selon au moins l'une des revendications précédentes 11 ou 12 et une matière de base de moulage réfractaire, la matière de base de moulage réfractaire étant choisie parmi un ou plusieurs membres du groupe comprenant l'olivine, la chamotte, la bauxite, les billes creuses de silicate d'aluminium, les perles de verre, les granulés de verre, les matières de base de moulage céramiques synthétiques et la dioxyde de silicium, en particulier sous la forme de sable de quartz, de sable de zircon ou de sable de minerai de chrome.

14. - Mélange de matières à mouler selon la revendication 13, dans lequel le liant est présent sous la forme d'un kit comprenant séparément les uns des autres au moins les composés isocyanates en tant qu'un composant et la résine phénolique du type éther benzylique en tant qu'autre composant.

15. - Procédé de fabrication d'un corps moulé sous forme de moule de coulée, de noyau ou de masselotte, comprenant
(i) préparer le mélange de matières à mouler selon au moins l'une des revendications 13 ou 14 ;
(ii) introduire le mélange de matières à mouler ou ses composants dans un outil de moulage ;
(iii) faire durcir le mélange de matières à mouler dans l'outil de moulage avec au moins une amine tertiaire pour obtenir un corps moulé autoportant durci ; et
(iv) séparer ensuite le corps moulé autoportant durci de l'outil de moulage et, le cas échéant, poursuivre le durcissement, ce par quoi on obtient un corps moulé durci.

16. - Procédé selon la revendication 15, dans lequel l'amine tertiaire est choisie parmi un ou plusieurs membres du groupe : la triméthylamine, la diméthyléthylamine, la diméthyl-n-propylamine, la diméthyl-iso-propylamine, la diéthylméthylamine, la triéthylamine, la tri-n-propylamine, la tri-isopropylamine, la tri-n-butylamine, la triisobutylamine, la tris(3-diméthylamino)propylamine, le N-méthylimidazole, le N-éthylimidazole et le 1-méthylbenzimidazole.

17. - Moule de coulée, noyau ou masselotte fabriqué(e) selon le procédé de l'une des revendications 15 ou 16.

18. - Utilisation du moule de coulée ou du noyau obtenu par le procédé de l'une des revendications 15 ou 16 pour la coulée de métal, en particulier la coulée du fer ou de l'aluminium.
